(19) Europäisches Patentamt
European Patent Office
Office européen des brevets

(11) **EP 1 978 283 B1**

(12) **EUROPÄISCHE PATENTSCHRIFT**

(45) Veröffentlichungstag und Bekanntmachung des Hinweises auf die Patenterteilung:
**13.06.2012 Patentblatt 2012/24**

(51) Int Cl.:
***F16H 25/22*** *(2006.01)*

(21) Anmeldenummer: **08006728.3**

(22) Anmeldetag: **02.04.2008**

(54) **Verfahren zur Herstellung einer Vorrichtung zur Umwandlung einer Drehbewegung in eine Axialbewegung**

Method of assembling a device for transforming rotary motion into axial motion

Methode d'assemblage d'un dispositif de transformation d'un mouvement rotatif en mouvement axial

(84) Benannte Vertragsstaaten:
**AT CH CZ DE FR IT LI NL PL TR**

(30) Priorität: **03.04.2007 DE 102007015985**

(43) Veröffentlichungstag der Anmeldung:
**08.10.2008 Patentblatt 2008/41**

(73) Patentinhaber: **NARR Beteiligungs GmbH**
**73230 Kirchheim/Teck (DE)**

(72) Erfinder: **Langbein, Ulrich**
**73230 Kirchheim/Teck (DE)**

(74) Vertreter: **Ruckh, Rainer Gerhard**
**Fabrikstrasse 18**
**73277 Owen/Teck (DE)**

(56) Entgegenhaltungen:
**EP-A1- 0 320 621       EP-A1- 0 743 470**
**EP-A1- 1 936 237       EP-A2- 1 961 995**
**DE-A1- 1 962 872       DE-A1- 19 516 199**
**DE-A1-102005 039 559**

**Beschreibung**

Die Erfindung betrifft eine Vorrichtung gemäß dem Oberbegriff des Anspruchs 1.

Eine derartige Vorrichtung ist aus der DE 37 39 059 A1 bekannt. Diese Vorrichtung dient zur Umwandlung einer Drehbewegung in eine Axialbewegung oder umgekehrt. Als wesentliche Komponenten umfasst die Vorrichtung eine eine Außenprofilierung aufweisende Spindel, eine die Spindel umgebende und relativ zu dieser drehbare, eine Innenprofilierung aufweisende Mutter und dazwischen angeordnete Wälzkörper, welche unterschiedliche Profilierungen aufweisen, von welchen die eine einen axialen Kraftschluss mit der Außenprofilierung der Spindel und die andere einen axialen Kraftschluss mit der Mutter herstellt.

Die so ausgebildete Vorrichtung bildet einen Gewindetrieb, welchem ein Elektroantrieb zugeordnet sein kann, dessen Drehbewegung durch den Gewindetrieb in eine langsame Axialbewegung umgesetzt wird.

Hierbei wälzen die Wälzkörper, die endseitig in Abstandsscheiben drehbar gelagert sind, mit einer bestimmten Umlaufgeschwindigkeit auf dem die Außenprofilierungen der Wälzkörper in der Außenprofilierung der Spindel geführt ist. Die Profilierungen der über den Umfang der Spindel verteilten, vorzugsweise an äquidistanten Winkelscheiben zueinander liegenden Wälzkörper weisen einen axialen Versatz auf.

Der axiale Versatz der Profilierungen der einzelnen Wälzkörper leitet sich von der Steigung der ein Gewinde bildenden Außenprofilierung der Spindel ab. Dadurch bilden die Wälzkörper in ihrer Gesamtheit ein Gewinde für die Spindel. Das Gewinde ist damit nicht von der Innenprofilierung der Mutter gebildet. In dieser Innenprofilierung laufen vielmehr die zweiten Profilierungen der Wälzkörper.

Je nach Applikation, in welcher der Gewindetrieb eingesetzt wird, kann es erforderlich sein, diesen mit unterschiedlichen Steigungen auszubilden. Je nach Wahl der Steigung des Gewindetriebs wird der Vorschub der mit dem Gewindetrieb generierten Axialbewegung geändert. Die Steigung des Gewindetriebs kann dadurch variiert werden, dass Spindeln mit unterschiedlichen Gangzahlen eingesetzt werden. Nachteilig hierbei ist jedoch, dass es zur Ausbildung unterschiedlicher Varianten des Gewindetriebs erforderlich ist, neben der Verwendung von Spindeln unterschiedlicher Gangzahl eine konstruktive Anpassung weiterer Komponenten der Vorrichtung vorzunehmen. Dies bedingt einen unerwünscht konstruktiven Aufwand bei der Herstellung derartiger Gewindetriebe.

Die DE 195 16 199 A1, die den nächstliegenden Stand der Technik bildet, betrifft eine Verwendung einer Vorrichtung zur Umwandlung einer Dreh- in eine Axialbewegung oder umgekehrt als Überlastungsschutz, bei welcher Vorrichtung das Gewinde einer Gewindespindel ein ein- oder mehrgängiges Feingewinde ist, die Profilierung einer die Gewindespindel umgebenden Mutter in verhältnismäßig groben Rillen ausgeführt ist, und eine Anzahl von Wälz- oder Rollkörpern, welche zwischen der Gewindespindel und der Mutter angeordnet sind, unterschiedliche Profilierungen, nämlich eine zum Gewinde der Spindel passende Profilierung und eine zu den Rillen passende Profilierung, aufweisen.

Der Erfindung liegt die Aufgabe zugrunde, den konstruktiven Aufwand zur Bereitstellung unterschiedlicher Varianten einer Vorrichtung der eingangs genannten Art möglichst gering zu halten.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Verfahren dient zur Herstellung einen Vorrichtung zur Umwandlung einer Drehbewegung in eine Axialbewegung oder umgekehrt. Die Vorrichtung umfasst eine Spindel mit einer Außenprofilierung in Form eines Gewindes vorgegebener Gangzahl, eine die Spindel umgebende und relativ zu dieser drehbare, eine Innenprofilierung aufweisende Mutter sowie dazwischen angeordnete Wälzkörper. Die Wälzkörper weisen zwei unterschiedliche Profilierungen auf, von welchen die eine einen axialen Kraftschluss zur Außenprofilierung der Spindel und die andere einen axialen Kraftschluss zur Innenprofilierung der Mutter herstellt. Die mit dem Gewinde der Spindel in Kontakt stehenden Profilierungen der Wälzkörper weisen Rillen auf. Die Rillen der Profilierungen zweier benachbarter Wälzkörper weisen jeweils einen relativen Versatz $\Delta V = T \cdot G/N$ zueinander auf. T ist die Teilung der Rillen, G die Gangzahl des Gewindes der Spindel und N die Anzahl der Wälzkörper. Die Versätze der Rillenstrukturen zweier Wälzkörper sind symmetrisch zu einem Wälzkörper mit einem Versatz $V = 0$ gebildet. Zwei Wälzkörper mit den Versätzen $V = V_0$ und $V = -V_0$ weisen identische Bauformen auf und sind in umgekehrter Richtung in der Vorrichtung eingebaut. Unterschiedliche Vorrichtungsvarianten sind durch den Einsatz von Spindeln unterschiedlicher Gangzahl ausbildbar. Für sämtliche Vorrichtungsvarianten sind dieselben Typen von Wälzkörpern einsetzbar.

Da erfindungsgemäß ein und dieselben Wälzkörper zur Ausbildung unterschiedlicher Varianten von Gewindetrieben eingesetzt werden können, können die unterschiedlichen Varianten einfach und kostengünstig hergestellt werden. Dabei ist insbesondere vorteilhaft, das mit einer geringen Anzahl von Wälzkörpern unterschiedliche Varianten von Gewindetrieben mit Spindeln unterschiedlicher Gangzahl realisiert werden können. Die Teilezahl zur Ausbildung der unterschiedlichen Varianten kann somit gering gehalten werden.

Ein wesentlicher Aspekt der Erfindung besteht dabei darin, dass die Wälzkreisdurchmesser der Wälzkörper für die unterschiedlichen Varianten gleich groß sind. Vorteilhaft erfolgt dies dadurch, dass die Spindeln der unterschiedlichen Gangzahlen zur Ausbildung der einzelnen Vorrichtungsvarianten hierzu angepasst werden. Damit können die Wälzkörper unverändert in den einzelnen Vorrichtungsvarianten eingesetzt werden. Alternativ können die Wälzkreisdurchmesser auch an der Mutter korrigiert werden.

Damit die Wälzkörper der erfindungsgemäßen Verfahren für unterschiedliche Vorrichtungsvarianten eingesetzt werden können, müssen diese vorgegebene Symmetriebedingungen erfüllen. Diese Symmetriebedingungen beziehen sich auf die Strukturen der Rillen, die die in dem Gewinde der Spindel verlaufenden Profilierungen bilden.

Die Profilierungen der einzelnen Wälzkörper weisen zueinander axiale Versätze auf, die sich von der Steigung des Gewindes der Spindel ableiten, wodurch die Wälzkörper in ihrer Gesamtheit ein Gewinde für die Spindel bilden. Allgemein weisen die Rillen der Profilierungen zweier benachbarter Wälzkörper jeweils einen Versatz $\Delta V = T \cdot G/N$ zueinander auf, wobei T die Teilung der Rillen, G die Gangzahl des Gewindes der Spindel und N die Anzahl der Wälzkörper in dem Gewindetrieb ist. Die Summe aller Versätze $\Delta V$ zwischen den benachbarten Wälzkörpern des Gewindetriebs entspricht somit der Steigung p des Gewindes der Spindel, welches durch die Beziehung $p = T \cdot G$ definiert ist.

Abgesehen von dieser vorgegebenen Relativ-Anordnung der Wälzkörper zueinander besteht jedoch ein Freiheitsgrad in der Wahl der Anordnung der Wälzkörper darin, dass das Muster der Rillenversätze der Wälzkörper seiner Gesamtheit entlang der Spindel verschoben werden kann, ohne dass sich hierdurch die Funktion des Gewindetriebs ändert.

Durch eine geeignete Verschiebung der Muster der Rillenversätze, das heißt einer Variation der Absolutwerte V der Versätze der Wälzkörper, wird erfindungsgemäß erreicht, dass die Wälzkörper, die bei einer Spindel mit eingängigem Gewinde eingesetzt werden, auch für Vorrichtungsvarianten eingesetzt werden, in welchen Spindeln mit mehrgängigen Gewinden eingesetzt werden, und zwar ohne dass hierzu weitere, andersartige Wälzkörper zur Realisierung der weiteren Varianten verwendet werden müssen.

Dies bedeutet, dass durch eine geeignete Wahl der Rillenversätze der einzelnen Wälzkörper erreicht wird, dass aus einem Satz von Wälzkörpern für eine Vorrichtungsvariante mit einer Spindel mit eingängigem Gewinde die Sätze von Wälzkörpern für alle weiteren Vorrichtungsvarianten mit Spindeln mit mehrgängigen Gewinden durch eine geeignete Auswahl abgeleitet werden können. Dieses Auswahlverfahren ist unabhängig davon anwendbar, wieviele Wälzkörper ein Gewindetrieb aufweist.

Erfindungsgemäß werden die Versätze der Rillenstrukturen von Paaren von Wälzkörpern symmetrisch zu einem Wälzkörper mit einem Versatz $V = 0$ gewählt, wobei dieser dadurch definiert ist, dass dessen Rillenstruktur symmetrisch zu seiner senkrecht zur Längsachse verlaufenden Symmetrieebene ist. Diese Ausführungsform ist deshalb vorteilhaft, da zwei Wälzkörper mit

den Versätzen $V = V_0$ und $V = - V_0$ identische Bauformen aufweisen und lediglich in umgekehrter Richtung im Gewindetrieb eingebaut werden müssen. Damit reduziert sich die Anzahl der unterschiedlichen Typen von Wälzkörpern, die für die Vorrichtungsvarianten benötigt werden, erheblich.

Die Erfindung wird im Nachstehenden anhand der Zeichnungen erläutert. Es zeigen:

Figur 1: Komplettdarstellung eines Ausführungsbeispiels einer Vorrich- tung zur Umwandlung einer Drehbewegung in eine Axialbewe- gung.

Figur 2: Einzeldarstellung von Wälzkörpern a) mit symmetrisch ausgebildeter Rillenstruktur b) mit einer Rillenstruktur mit positivem Versatz c) mit einer Rillenstruktur mit negativem Versatz.

Figur 3: Wälzkörper-Satz für die Vorrichtung gemäß Figur 1.

Figur 4: Anordnung des Wälzkörper-Satzes gemäß Figur 3 auf der Man- telfläche einer eingängigen Spindel.

Figur 5: Anordnung des Wälzkörper-Satzes gemäß Figur 3 auf der Man- telfläche einer dreigängigen Spindel.

Figur 6a-d: Darstellung der Ableitung von Wälzkörper-Sätzen für Spindeln unterschiedlicher Gangzahlen aus dem Wälzkörper-Satz gemäß Figur 3.

Figur 7: Darstellung des Wälzkörper-Satzes gemäß Figur 3 für eine Spindel mit eingängigem Gewinde in der Vorrichtung gemäß Figur 1.

Figur 8: Wälzkörper-Satz für eine Spindel mit zweigängigem Gewinde in der Vorrichtung gemäß Figur 1.

Figur 9: Wälzkörper-Satz für eine Spindel mit dreigängigem Gewinde in der Vorrichtung gemäß Figur 1.

Figur 10: Darstellung der Ableitung von Wälzkörper-Sätzen für mehrgän- gige Spindeln aus einem Wälzkörper-Satz für eine eingängige Spindel für eine Vorrichtung mit sieben Wälzkörpern.

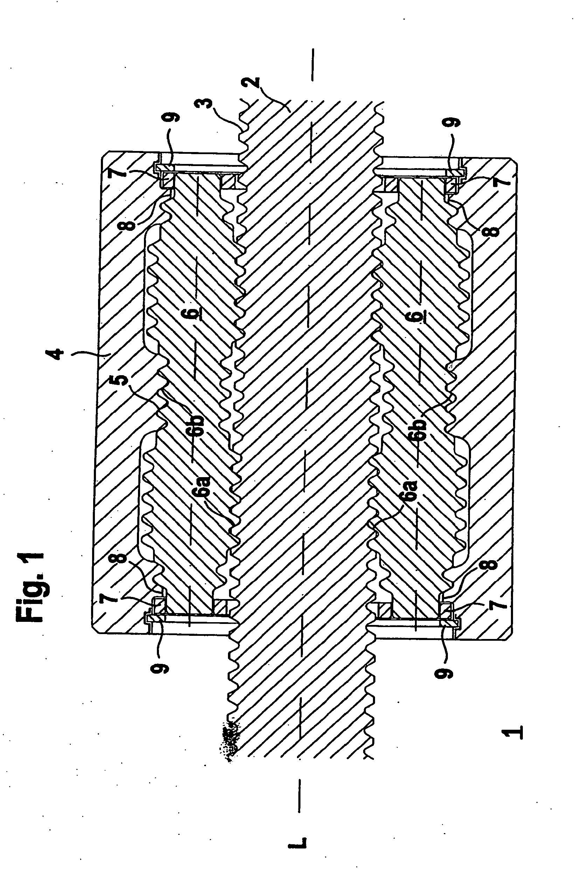

Figur 1 zeigt in einem Längsschnitt eine Vorrichtung 1 zur Umwandlung einer Drehbewegung in eine Axialbewegung oder umgekehrt. Die mit einem nicht gesondert dargestellten Elektromotor angetriebene Vorrichtung 1 bildet einen Gewindetrieb und umfasst eine Spindel 2, die an ihrer Mantelfläche 2a eine Außenprofilierung 3 in Form eines Gewindes aufweist. Die Spindel 2 bildet somit eine Gewindespindel und kann die Welle des Elektromotors bilden. Die Spindel 2 ist von einer Mutter 4 umgeben, wobei die Mutter 4 gegenüber der Spindel 2 drehbar ist. An der Innenseite der Mutter 4 ist eine Innenprofilierung 5 in Form von Rillen vorgesehen.

Zwischen der hohlzylindrischen Mutter 4 und der Spindel 2 ist eine vorgegebene Anzahl von Wälzkörpern 6 vorgesehen. Anstelle von Wälzkörpern 6 können auch Rollenkörper vorgesehen sein. Die Wälzkörper 6 sind in äquidistanten Winkeldistanzen in Umfangsrichtung der Spindel 2 versetzt angeordnet, wobei die Längsachsen der Wälzkörper 6 parallel zur Längsachse L der Spindel 2 verlaufen. Die längsseitigen Enden der Wälzkörper 6 sind jeweils in einer Abstandsscheibe 7 drehbar gelagert. Die Wälzkörper 6 weisen jeweils eine erste Profilierung 6a und eine zweite Profilierung 6b auf. Die Profilierungen 6a, 6b sind in Form von Rillenstrukturen ausgebildet. Mit der ersten Profilierung 6a wird ein axialer Kraftschluss des Wälzkörpers 6 mit der Spindel 2 hergestellt indem diese Profilierung 6a in der Außenprofilierung 3 der Spindel 2 geführt ist. Mit der zweiten Profilierung 6b wird ein axialer Kraftschluss des Wälzkörpers 6 mit der Mutter 4 hergestellt, indem diese Profilierung 6b in der Innenprofilierung 5 der Mutter 4 geführt ist.

Die die längsseitigen Enden der Wälzkörper 6 aufnehmenden Abstandsscheiben 7 dienen als Abstandshalter für die Wälzkörper 6. Die identisch ausgebildeten Abstandsscheiben 7 weisen eine kreisscheibenförmige Form auf. In der Mitte jeder Abstandsscheibe 7 ist eine zentrale Bohrung vorgesehen, durch welche die Spindel 2 geführt ist. Dabei liegen die Abstandsscheiben 7 in Abstand zur Spindel 2. Weiterhin weisen die Abstandsscheiben 7 Durchgangsbohrungen auf, in welchen die längsseitigen Enden der Wälzkörper 6 drehbar gelagert sind. Zur Axialfixierung der Abstandsscheiben 7 an der Innenkontur der Mutter 4 sind Absätze 8 vorgesehen. Die dort anliegenden Abstandsscheiben 7 sind jeweils durch einen in einer Nut der in der Innenkontur der Mutter 4 gelagerten Sprengring 9 lagegesichert.

Die Profilierungen 6a der einzelnen Wälzkörper 6 sind versetzt zueinander. Dabei weist die Profilierung 6a jedes Wälzkörpers 6 zu dem vorigen Wälzkörper 6 einen definierten axialen Versatz auf. Die versetzten Profilierungsstrukturen der Wälzkörper 6 bilden ein Gewinde für die Außenprofilierung 3, das heißt das Gewinde der Spindel 2. Bei einer Drehbewegung der Spindel 2 relativ zur Mutter 4 wälzen die Wälzkörper 6 mit den Profilierungen 6a auf der Außenprofilierung 3 ab, wobei zugleich die zweiten Profilierungen 6b in der Innenprofilierung 5 der Mutter 4 geführt sind.

Die mit dem Gewindetrieb pro Umdrehung der Spindel 2 erzeugte Vorschubbewegung kann dadurch variiert werden, indem Spindeln 2 mit unterschiedlicher Gangzahl eingesetzt werden. Entsprechend der Steigung des Gewindes der Spindel 2 müssen die Rillenversätze der Wälzkörper 6, im folgenden Versätze genannt, gewählt werden, da die bei Profilierungen 6a, 6b bildenden Rillenstrukturen der Wälzkörper 6 das Gewinde für die Spindel 2 bilden.

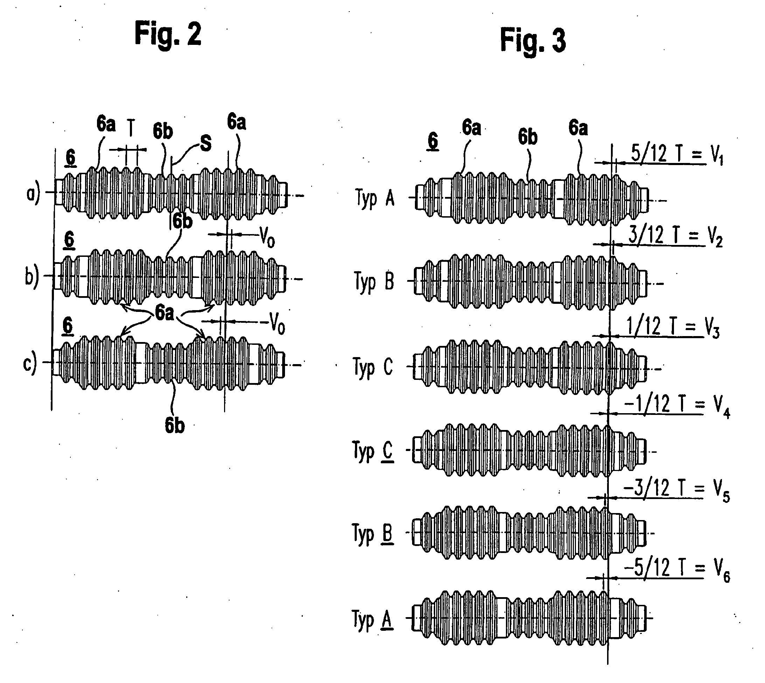

Die Figuren 2a-c zeigen exemplarisch Wälzkörper 6 mit unterschiedlichen Rillenstrukturen und Versätzen. In Figur 2a ist mit T die Teilung der Profilierung 6a, das heißt die Abstände der Rillen dieser Rillenstruktur bezeichnet. Figur 2a zeigt einen symmetrischen Wälzkörper 6, das heißt einen Wälzkörper 6, dessen Profilierung 6a eine Rillenstruktur mit dem Versatz $\Delta V = 0$ aufweist, da diese symmetrisch zur senkrecht zu deren Längsachse verlaufenden Spiegelebene S ist. Die Rillenstruktur des Wälzkörpers 6 gemäß Figur 2b weist gegenüber dem symmetrischen Wälzkörper 6 von Figur 2a einen positiven Versatz $V = +V_0$ auf. Die Rillenstruktur des Wälzkörpers 6 gemäß Figur 2c weist gegenüber dem symmetrischen Wälzkörper 6 von Figur 2a einen negativen Versatz $V = -V_0$ auf. Dabei ist der Wälzkörper 6 gemäß Figur 2c baugleich mit dem Wälzkörper 6 gemäß Figur 2b. Der Wälzkörper 6 von Figur 2c ist gegenüber dem Wälzkörper 6 von Figur 2c lediglich um eine senkrecht zur Zeichenebene orientierte Drehachse gedreht.

Figur 3 zeigt einen Satz von sechs Wälzkörpern 6, der in der Vorrichtung 1 gemäß Figur 1 einsetzbar ist. Der Satz von Wälzkörpern 6 umfasst sechs unterschiedliche Typen. Ein erster Typ A weist einen Versatz von $V_1 = 5/12\ T$ relativ zu einem symmetrischen Wälzkörper 6 mit Versatz $V = 0$ auf, wobei T wieder die Teilung der Rillen der Profilierung 6a der Wälzkörper 6 gemäß Figur 3 ist. Ein zweiter Typ B weist einen Versatz von $V_2 = 3/12\ T$ auf. Ein dritter Typ C weist einen Versatz von $V_3 = 1/12\ T$ auf. Ein vierter Typ $\underline{C}$ weist einen Versatz von $V_4 = -1/12\ T$ auf und ist baugleich zum Typ C. Die Typen C und $\underline{C}$ unterscheiden sich nur durch die Einbaulagen im Gewindetrieb, das heißt zur Ausbildung des Typs $\underline{C}$ wird der entsprechende Wälzkörper 6 gedreht zum Wälzkörper 6 des Typs C im Gewindetrieb eingebaut. Entsprechend ergibt sich der Wälzkörper 6 gemäß Typ $\underline{B}$ mit dem Versatz $V_5 = -3/12\ T$ durch Drehung von Typ B. Ebenso ergibt sich der Wälzkörper 6 gemäß Typ $\underline{A}$ mit dem Versatz $V_6 = -5/12\ T$ durch Drehung von Typ A.

Der Gewindetrieb gemäß Figur 1 weist insgesamt sechs der Außenprofilierungen der Spindel 2 umlaufende Wälzkörper 6 auf. Zur Bereitstellung von unterschiedlichen Varianten des Gewindetriebs mit unterschiedlichen Steigungen werden in der Vorrichtung 1 gemäß Figur 1 Spindeln 2 mit unterschiedlichen Gangzahlen eingesetzt. Dabei sind die verschiedenen Spindeln 2 so bearbeitet und dimensioniert, dass für alle Vorrichtungsvarianten die Wälzkreisdurchmesser der Wälzkörper 6 gleich groß sind. Dies ist eine wesentliche Voraussetzung dafür, dass die Wälzkörper 6 des Wälzkörper-Satzes gemäß Figur 3 ausreichend sind, um aus diesen die Wälzkörper 6 für sämtliche Varianten der Vorrichtung 1 bereitzustellen.

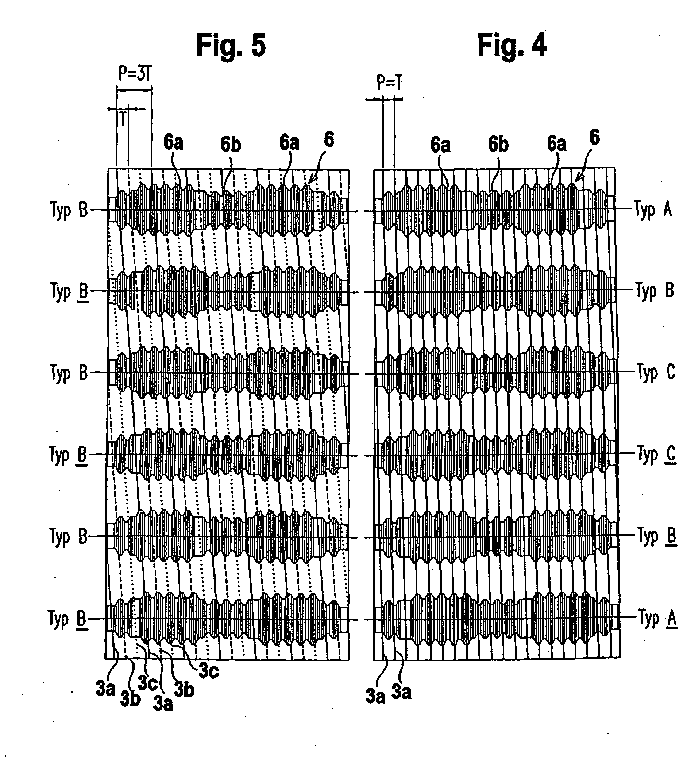

Die Figuren 4 und 5 zeigen jeweils die aufgeschnittene, in einer Ebene ausgebreitete Mantelfläche 2a einer Spindel 2 der Vorrichtung 1 gemäß Figur 1 mit den zugehörigen sechs Wälzkörpern 6. Bei der Spindel 2 gemäß Figur 4 handelt es sich um eine eingängige Spindel 2, das heißt um eine Spindel 2 mit einem Gang 3a. Demgegenüber ist die Spindel 2 gemäß Figur 5 dreigängig mit drei Gängen 3a, 3b, 3c ausgebildet. Bei der eingängigen Spindel 2 gemäß Figur 5 ist die Steigung p der Spindel 2 gleich der Teilung T, das heißt den Abständen der Rillen der Profilierung 6a. Allgemein gilt für die Steigung p der Spindel 2 die Beziehung

$$p = T \cdot G$$

wobei G die Gangzahl der Spindel 2 ist. Dementsprechend ist die Steigung der dreigängigen Spindel 2 gemäß Figur 5 p = 3 T.

Die relativen Versätze ΔV benachbarter Wälzkörper 6 des Gewindetriebs sind an die Steigung der Spindel 2 angepasst, und zwar derart, dass die Summe der Versätze zwischen den einzelnen Wälzkörpern 6 gerade der Steigung der Spindel 2 entspricht. Daraus folgt, dass der relative Versatz ΔV zweier benachbarter Wälzkörper 6 des Gewindetriebs sich aus folgender Beziehung ergibt:

$$\Delta V = T \cdot G/N$$

wobei N die Anzahl der Wälzkörper 6 im Gewindetrieb ist.

Bei der Ausführungsform gemäß Figur 4, das heißt einem Gewindetrieb mit eingängigem Gewinde, ist G = 1, so dass sich der für relativen Versatz ΔV zwischen zwei Wälzkörpern 6 der Wert ΔV = T/6 ergibt. Bei der Ausführungsform gemäß Figur 5, das heißt einem dreigängigen Gewinde, ist G = 3, so dass sich für den relativen Versatz ΔV zwischen zwei Wälzkörpern 6 der Wert ΔV = T/2 ergibt.

Die relativen Versätze ΔV zwischen benachbarten Wälzkörpern 6 eines Gewindetriebs sind durch die Steigung der jeweils im Gewindetrieb eingesetzten Spindel 2 bestimmt. Jedoch besteht ein Freiheitsgrad in der Wahl der Absolutwerte der Versätze, das heißt das Muster der Versätze aller Wälzkörper 6 kann entlang der Spindel 2 verschoben werden, ohne dass sich hierbei die Funktion des Gewindetriebs ändert. Die Absolutwerte der Versätze $V_1 \ldots V_6$ der sechs Wälzkörper 6 des Wälzkörper-Satzes gemäß Figur 3 sind nun so gewählt, dass für unterschiedliche Varianten des Gewindetriebs mit Spindeln 2 unterschiedlicher Gangzahl allein Wälzkörper 6 aus dem Wälzkörper-Satz gemäß Figur 3 ausgewählt werden, das heißt es sind keine über die in Figur 3 dargestellten Wälzkörper 6 weiteren Wälzkörper 6 notwendig, um die unterschiedlichen Vorrichtungsvarianten zu genieren.

Bei der Ausführungsform gemäß Figur 4, das heißt für einen Gewindetrieb mit einer eingängigen Spindel 2 werden die Wälzkörper 6 der Typen A, B, C, C̲, B̲, A̲ in einer Reihenanordnung eingesetzt, das heißt jeder Wälzkörper-Typ des Wälzkörper-Satzes gemäß Figur 3 wird in dem Gewindetrieb gemäß Figur 4 genau einmal verwendet. Der Versatz zwischen benachbarten Wälzkörpern 6, das heißt den Wälzkörper-Paaren A, B sowie B, C, sowie C, C̲, sowie C̲, B̲ sowie B̲, A̲ sowie A̲, A beträgt jeweils ΔV = T/6, so dass sich die Summe aller relativen Versätze ΔV zum Wert T, das heißt dem Wert der Steigung des eingängigen Gewindes der Spindel 2 addiert.

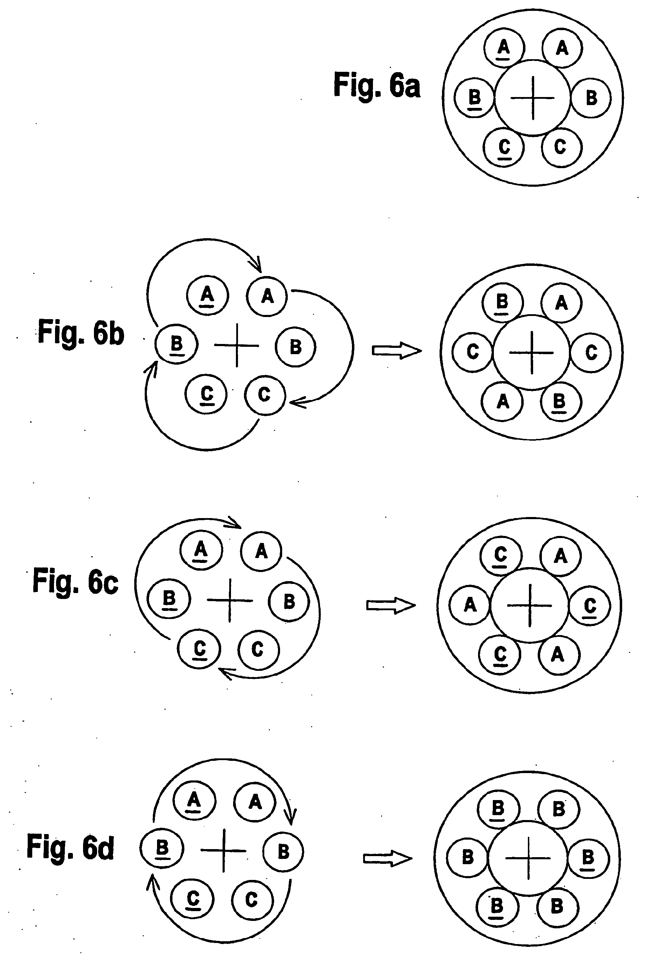

Bei der Ausführungsform gemäß Figur 5, das heißt für einen Gewindetrieb mit dreigängiger Spindel 2 werden aus dem Wälzkörper-Satz gemäß Figur 6 nur zwei Typen, nämlich die Wälzkörper 6 der Typen B und B̲ ausgewählt. Diese bilden eine alternierende Anordnung in Umfangsrichtung der Spindel 2, so dass sich für den relativen Versatz jeweils zweier benachbarter Wälzkörper 6 der Typen B und B̲ der Wert ΔV = T/2 ergibt. Die Summe aller relativen Versätze ΔV ergibt den Wert der Steigung der dreigängigen Spindel 2, nämlich p = 3T.

Die Figuren 6a - 6d veranschaulichen allgemein das Auswahlverfahren zur Auswahl von Wälzkörper 6 des Wälzkörper-Satzes gemäß Figur 3 um daraus die Wälzkörper 6 für unterschiedliche Gewindetrieb-Varianten mit unterschiedlicher Gangzahl zu erhalten.

Figur 6a zeigt die Wälzkörper-Anordnung gemäß Figur 4 für den Gewindetrieb mit einer eingängigen Spindel 2. Hier wird jeder der Typen des Wälzkörper-Satzes von Figur 3 genau einmal benötigt um die sechs Wälzkörper 6 für den Gewindetrieb zu bilden, wobei die Wälzkörper 6 in der Reihenfolge A, B, C, C̲, B̲, A̲ entlang der Mantelfläche der Spindel 2 angeordnet sind. Da die Typen A̲, B̲, C̲ baugleich mit den Typen A, B, C sind und nur bezüglich diesen gedreht in den Gewindetrieb eingesetzt werden, werden nur drei unterschiedliche Bauformen von Wälzkörpern 6 zur Realisierung dieser Vorrichtungsvariante benötigt.

Wie nachstehend anhand der Figuren 6b - 6d aufgezeigt wird, können aus dieser Wälzkörper-Anordnung für die Vorrichtungsvariante mit einer eingängigen Spindel 2 auch die Vorrichtungsvarianten für zwei- und dreigängige Spindeln 2 abgeleitet werden, das heißt die für die Variante gemäß Figur 6a benötigten Wälzkörper-Typen reichen zur Bildung der weiteren Varianten aus.

Figur 6b zeigt die Ableitung der Wälzkörper 6 für den Gewindetrieb mit einer zweigängigen Spindel 2 aus der Variante gemäß Figur 6a für eine eingängige Spindel 2. Demzufolge werden, wie im linken Diagramm von Figur 6b veranschaulicht, die Wälzkörper 6 für den Gewindetrieb mit zweigängiger Spindel 2 aus der Wälzkörper-Anordnung für den Gewindetrieb mit eingängiger Spindel 2 dadurch gewonnen, dass ausgehend von einem Anfangs-Wälzkörper, beispielsweise vom Wälzkörper 6 des Typs A immer um zwei, allgemein um G Wälzkörper 6 weitergesprungen wird, das heißt zur Bildung der Wälzkörper 6 für den Gewindetrieb mit zweigängiger Spindel 2 erfolgt eine Auswahl der Wälzkörper-Anordnung für den Gewindetrieb mit zweigängiger Spindel 2 derart, dass als erster Wälzkörper 6 Typ A, dann Typ C, dann Typ B, dann wieder Typ A, dann wieder Typ C und schließlich wieder Typ B ausgewählt wird, so dass die im rechten Diagramm von Figur 6b dargestellte Wälzkörper-Anordnung für den Gewindetrieb mit zweigängiger Spindel 2 erhalten wird. Für die den Gewindetrieb mit zweigängiger Spindel 2 werden somit nur drei der sechs in Figur 3 dargestellten Typen von Wälzkörpern 6 benötigt.

Auf analoge Weise werden aus der Wälzkörper-Anordnung für den Gewindetrieb mit eingängiger Spindel 2 auch die Wälzkörper 6 für den Gewindetrieb mit dreigängiger Spindel 2 abgeleitet. Dies ist in den Figuren 6c, d veranschaulicht. In beiden Ausführungsformen werden die Wälzkörper 6 für den Gewindetrieb mit dreigängiger Spindel 2 aus der Anordnung gemäß Figur 6a dadurch gewonnen, das ausgehend von einem Anfangs-Wälzkörper immer um drei Wälzkörper 6 weitergesprungen wird (jeweils linkes Diagramm in den Figuren 6c, d). Bei den so erhaltenen, jeweils im rechten Diagramm der Figuren 6c, d dargestellten Wälzkörperanordnungen ergibt sich damit ein Versatz ΔV = T/2 zwischen den benachbarten Wälzkörpern 6, so dass die Summe aller Versätze wieder dem Wert der Steigung der Spindel 2, im vorliegenden Fall p = 3T entspricht.

Die Wälzkörper-Anordnung gemäß Figur 6c für den Gewindetrieb mit dreigängiger Spindel 2 wird aus der Wälzkörper-Anordnung des Gewindetriebs mit eingängiger Spindel 2 ausgehend von dem Wälzkörper 6 des Typs A gewonnen. Dementsprechend die die Wälzkörper-Anordnung für den Gewindetrieb mit dreigängiger Spindel 2 von den Wälzkörpern 6 der Typen A und C (in alternierender Reihenfolge) gebildet. Bei dieser Ausführungsform werden damit zwei Typen des in Figur 3 dargestellten Wälzkörper-Satzes benötigt.

Besonders vorteilhaft ist die in Figur 6d dargestellte Variante, bei welcher die Auswahl der Wälzkörper 6 für den Gewindetrieb mit dreigängiger Spindel 2 aus den Wälzkörpern 6 des Gewindetriebs mit eingängiger Spindel 2 nicht ausgehend vom Wälzkörper 6 des Typs A, sondern ausgehend vom Wälzkörper 6 des Typs B ausgewählt wird. In diesem Fall weist die Wälzkörper-Anordnung des Gewindetriebs mit dreigängiger Spindel 2 eine alternierende Anordnung der Typen B und B auf, das heißt es werden drei Wälzkörper 6 des Typs B und drei Wälzkörper 6 des Typs B benötigt. Da die Typen B und B baugleich sind und sich nur in den Einbaulagen im Gewindetrieb unterscheiden, wird in diesem Fall nur ein Bautyp eines Wälzkörpers 6 benötigt. Diese Variante entspricht der in Figur 5 dargestellten Ausführungsform.

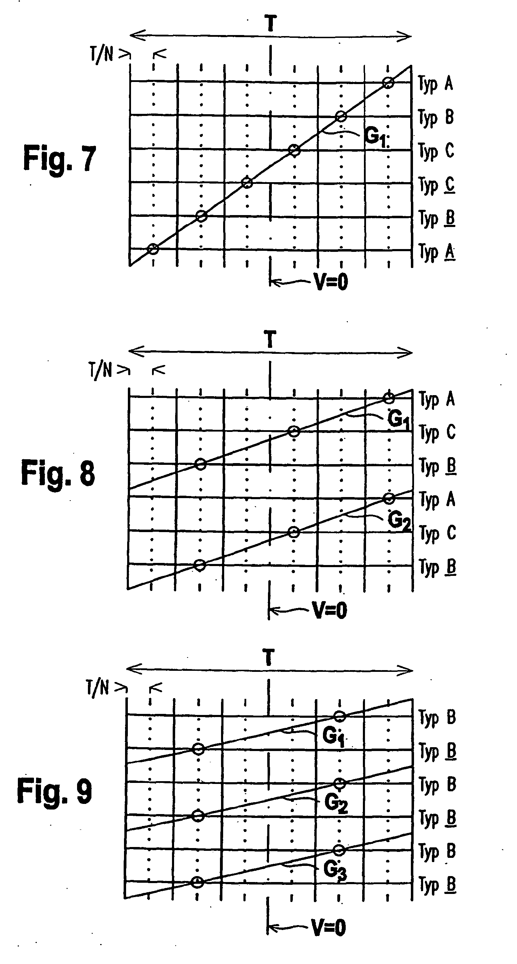

Die Figuren 7 bis 9 zeigen die Anordnungen der Wälzkörper 6 der Ausführungsformen gemäß den Figuren 6a, b, d in ihren Anordnungen auf der jeweiligen Spindel 2. Dabei zeigt die Spindel-Längsachse in den Figuren 7 bis 9 jeweils in horizontaler Richtung. Die Rastereinteilungen T zeigen die Teilung der Wälzkörper 6, welche in Einheiten von T/6 unterteilt ist. Die Punkte in den Diagrammen der Figuren 7 bis 9 zeigen die Positionen der einzelnen Wälzkörper 6 und deren Versätze relativ zum Versatz V = 0. Die schräg verlaufenden, die Punkte verbindenden Geraden entsprechen den Gängen 3a, 3b, 3c der Gewinde der Spindel 2.

Figur 7 zeigt die Wälzkörper 6 der Anordnung gemäß Figur 6a auf der Spindel 2 mit eingängigem Gewinde. Benachbarte Wälzkörper 6, dargestellt jeweils durch einen Punkt, weisen jeweils einen Versatz von ΔV = T/6 zueinander auf. Die Wälzkörper 6 sind entlang der den Gang 3a der eingängigen Spindel 2 bildenden, mit in Figur 7 mit $G_1$ bezeichneten Geraden angeordnet.

Figur 8 zeigt die Wälzkörper 7 der Anordnung gemäß Figur 6b (rechtes Diagramm) auf der Spindel 2 mit zweigängigem Gewinde. Jeweils benachbarte Wälzkörper 6, also beispielsweise die Wälzkörper 6 der Typen A und C, weisen einen Versatz von ΔV = T/3 auf. Die ersten Wälzkörper 6 der Typen A, C, B liegen auf der Geraden $G_1$, die dem ersten Gang 3a des Gewindes der zweigängigen Spindel 2 entspricht. Die zweiten Wälzkörper 6 der Typen A, C, B liegen auf der Geraden $G_2$, die dem zweiten Gang 3b des Gewindes der Spindel 2 entspricht.

Figur 9 zeigt die Wälzkörper 6 der Anordnung gemäß Figur 6d (rechtes Diagramm) auf der Spindel mit dreigängigem Gewinde. Jeweils benachbarte Wälzkörper 6 der Typen B und B weisen einen Versatz ΔV = T/2 zueinander auf. Jeweils ein Paar von Wälzkörpern 6 der Typen B und B liegt auf einer Geraden $G_1$, $G_2$, $G_3$, welche jeweils einem Gang 3a, 3b, 3c eines Gewindes der dreigängigen Spindel 2 entspricht.

Die in den Figuren 6a - 6d veranschaulichten Ableitungen von Wälzkörpern 6 für mehrgängige Spindeln 2 aus einem Wälzkörper-Satz für eine eingängige Spindel 2 sind nicht auf Vorrichtungen 1 mit sechs Wälzkörpern 6 beschränkt. Die Zahl der Wälzkörper 6 für eine Vorrichtung 1 kann variabel gewählt sein, insbesondere sind auch ungerade Anzahlen von Wälzkörpern 6 in einer Vorrichtung 1 möglich.

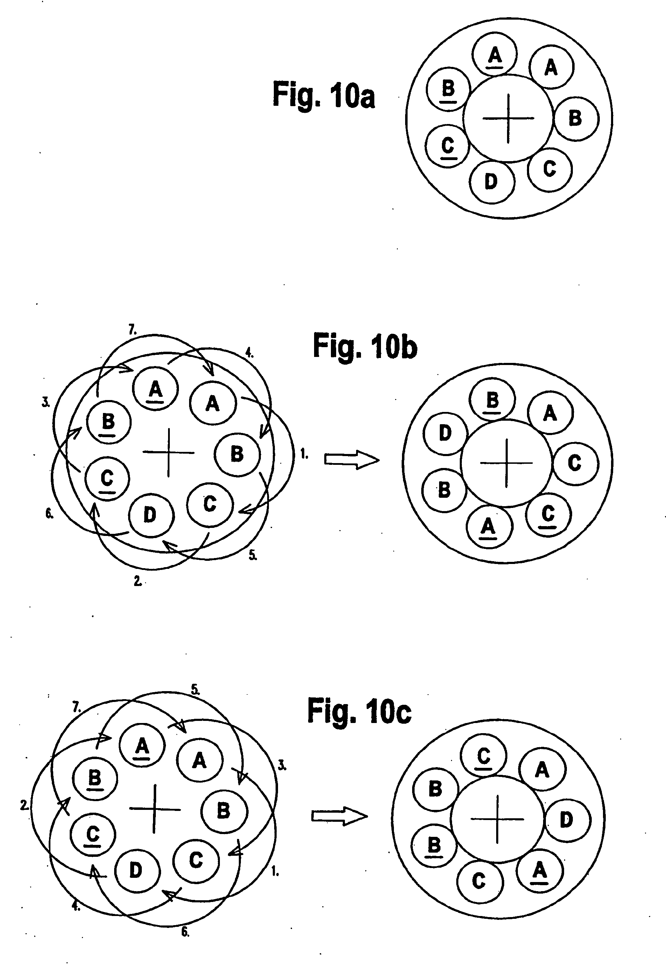

Die Figuren 10a - 10c zeigen eine Variante der Ausführungsform gemäß den Figuren 6a - c, wobei bei der Ausführungsform gemäß den Figuren 10a - 10c die Vorrichtung 1 sieben anstelle von sechs Wälzkörpern 6 aufweist.

Figur 10a zeigt die Wälzkörper-Anordnung für die Vorrichtung 1 mit einer eingängigen Spindel 2. Hier werden folgende Typen von Wälzkörpern 6 benötigt: A, B, C, D, C, B, A.

Jeder der Typen wird bei der Vorrichtungsvariante mit eingängiger Spindel 2 einmal benötigt. Bei eingängiger Spindel 2 ist die Teilung T wieder gleich der Steigung. Die Summe der Versätze ΔV zwischen benachbarten Wälzkörpern 6 muss wieder dem Betrag der Steigung entsprechen, so dass sich ΔV = T/7 ergibt.

Aus dem Wälzkörper-Satz für die eingängige Spindel werden analog zu der Ausführungsform gemäß den Figuren 6a - 6d wieder die Wälzkörper-Sätze für die Gewindetrieb-Varianten mit zwei- un J dreigängiger Spindel 2 abgeleitet.

Figur 10b zeigt die Ableitung der Wälzkörper 6 für die Variante mit zweigängiger Spindel 2 durch Auswahl aus den Wälzkörpern 6 der Variante mit eingängiger Spindel 2 gemäß Figur 10a. Bei der Variante mit zweigängiger Spindel 2 werden demzufolge Wälzkörper 6 der Typen A, C, C, A, B, D, B benötigt. Der Versatz zwischen benachbarten Wälzkörpern 6 beträgt $\Delta V = 2T/7$.

Figur 10c zeigt die Ableitung der Wälzkörper 6 für die Variante mit dreigängiger Spindel 2 durch Auswahl aus den Wälzkörpern 6 der Variante mit eingängiger Spindel 2 gemäß Figur 10a. Bei der Variante mit dreigängiger Spindel 2 werden demzufolge Wälzkörper 6 der Typen A, D, A, C, B, B, C eingesetzt Der Versatz zwischen benachbarten Wälzkörpern 6 beträgt $\Delta V = 3T/7$.

Bezugszeichenliste

| (1) | Vorrichtung |
| (2) | Spindel |
| (2a) | Mantelfläche |
| (3) | Außenprofilierung |
| (3a) | Gang |
| (3b) | Gang |
| (3c) | Gang |
| (4) | Mutter |
| (4a) | Grundkörper |
| (4b) | Ansatz |
| (5) | Innenprofilierung |
| (6) | Wälzkörper |
| (6a) | erste Profilierung |
| (6b) | zweite Profilierung |
| (7) | Abstandsscheibe |
| (8) | Absatz |
| (9) | Sprengring |
| (L) | Längsachse |

**Patentansprüche**

1. Ein Verfahren zur Herstellung einer Vorrichtung (1) zur Umwandlung einer Drehbewegung in eine Axialbewegung oder umgekehrt und mit einer eine Außenprofilierung (3) in Form eines Gewindes vorgegebener Gangzahl aufweisenden Spindel (2), mit einer die Spindel (2) umgebenden und relativ zu dieser drehbaren, eine Innenprofilierung (5) aufweisenden Mutter (4), mit dazwischen angeordneten Wälzkörpern (6), welche zwei unterschiedliche Profilierungen (6a, 6b) aufweisen, von welchen die eine einen axialen Kraftschluss zur Außenprofilierung (3) der Spindel (2) und die andere einen axialen Kraftschluss zur Innenprofilierung (5) der Mutter (4) herstellt, und die die mit dem Gewinde der Spindel (2) in Kontakt stehenden Profilierungen (6a) der Wälzkörper (6) weisen Rillen auf, wobei die Rillen der Profilierungen (6a) zweier benachbarter Wälzkörper (6) jeweils einen relativen Versatz $\Delta V = T \cdot G/N$ zueinander aufweisen, wobei T die Teilung der Rillen, G die Gangzahl des Gewindes der Spindel (2) und N die Anzahl der Wälzkörper (6) ist, und die Versätze der Rillenstrukturen zweier Wälzkörper (6) sind symmetrisch zu einem Wälzkörper (6) mit einem Versatz V = 0 gebildet, und zwei Wälzkörper (6) mit den Versätzen $V = V_0$ und $V = -V_0$ weisen identische Bauformen auf und sind in umgekehrter Richtung in der Vorrichtung (1) eingebaut, wobei unterschiedliche Vorrichtungsvarianten durch den Einsatz von Spindeln (2) unterschiedlicher Gangzahl ausbildbar sind, und wobei für sämtliche Vorrichtungsvarianten dieselben Typen von Wälzkörpern (6) einsetzbar sind.

2. Verfahren nach Anspruch 1, **dadurch gekennzeichnet, dass** der Wälzkreisdurchmesser der Wälzkörper (6) durch Anpassung der Spindel (2) für alle Vorrichtungsvarianten gleich groß ist.

3. Verfahren nach einem der Ansprüche 1 oder 2, **dadurch gekennzeichnet, dass** die für eine mehrgängige Spindel (2) eingesetzten Wälzkörper (6) aus dem Wälzkörper-Satz für eine eingängige Spindel (2) abgeleitet sind.

4. Verfahren nach einem der Ansprüche 1 bis 3, **dadurch gekennzeichnet, dass** ein Wälzkörper-Satz für eine eingängige Spindel (2) in Umfangsrichtung der Spindel (2) eine vorgegebene Reihenanordnung von N Wälzkörper (6) bildet, und dass aus diesem Wälzkörper-Satz ein Wälzkörper-Satz für eine Spindel (2) mit der Gangzahl G (G > 1) **dadurch** generierbar ist, dass aus der Reihenanordnung der Wälzkörper (6) ausgehend von einem frei wählbaren Wälzkörper N mal jeder G-te Wälzkörper (6) ausgewählt wird.

5. Verfahren nach Anspruch 4, **dadurch gekennzeichnet, dass** der Wälzkörper (6), von welchem aus die Auswahl gestartet wird, so gewählt wird, dass die Anzahl verschiedener Wälzkörper-Bauformen innerhalb eines Wälzkörper-Satzes minimal ist.

**Claims**

1. A method of producing a device (1) for converting a rotational movement into an axial movement or conversely and with a spindle (2), which has an external profiling (3) in the form of a thread having a predetermined number of starts, with a nut (4), which surrounds the spindle (2) and is rotatable relative thereto and which has an internal profiling (5), with roller bodies (6), which are arranged therebetween and which have two different profilings (6a, 6b), of which one produces an axial force couple with the external profiling (3) of the spindle (2) and the other an axial force couple with the internal profiling (5) of the nut (4), and the profilings (6a), which are disposed in contact with the spindle (2), of the roller bodies (6) have grooves, wherein the grooves of the profilings (6a) of two adjacent roller bodies (6) each have an offset $fV = T \cdot G/N$ relative to one another, wherein T is the pitch of the grooves, G is the number of starts of the thread of the spindle (2) and N is the number of the roller bodies (6), and the offsets of the groove structures of two roller bodies (6) are formed to be symmetrical with respect to a roller body (6) with an offset V = 0, and two roller bodies (6) with the offsets $V = V_0$ and $V = -V_0$ have identical constructional forms and are incorporated in the device (1) in opposite direction, wherein different device variants can be constructed through the use of spindles (2) with different start numbers and wherein the same types of roller bodies (6) are usable for all device variants.

2. Method according to claim 1, **characterised in that** the rolling circle diameter of the roller bodies (6) is, through adaptation of the spindle (2), the same size for all device variants.

3. Method according to one of claims 1 and 2, **characterised in that** the roller bodies (6) used for a multi-start spindle (2) are derived from the roller body set for a single-start spindle (2).

4. Method according to any one of claims 1 to 3, **characterised in that** a roller body set for a single-start spindle (2) forms a predetermined serial arrangement of N roller bodies (6) in circumferential direction of the spindle (2) and that from this roller body set a roller body set for a spindle (2) with a start number G (G > 1) can be generated in such a manner that starting from a freely selectable roller body N each G$^{th}$ roller body (6) is selected from the serial arrangement of the roller bodies (6).

5. Method according to claim 4, **characterised in that** the roller body (6) from which the selection is started is so selected that the number of different roller body constructional forms is minimal within a roller body set.

**Revendications**

1. Procédé de fabrication d'un dispositif (1) destiné à transformer un mouvement de rotation en un mouvement axial ou inversement et comprenant une broche (2) présentant un profilage extérieur (3) sous la forme d'un filetage ayant un nombre prédéfini de filets, un écrou (4) entourant la broche (2), rotatif par rapport à celle-ci et présentant un profilage intérieur (5), et des éléments roulants (6) disposés entre l'écrou et la broche, qui présentent deux profilages différents (6a, 6b) dont l'un réalise un flux de force axial vers le profilage extérieur (3) de la broche (2) et l'autre un flux de force axial vers le profilage intérieur (5) de l'écrou (4), et les profilages (6a) des éléments roulants (6) qui sont en contact avec le filetage de la broche (2) présentent des gorges, sachant que les gorges des profilages (6a) de deux éléments roulants voisins (6) présentent chaque fois un décalage relatif $\Delta V = T \cdot G/N$ l'une par rapport à l'autre, où T est le pas des gorges, G le nombre de filets du filetage de la broche (2) et N le nombre d'éléments roulants (6), et les décalages des structures de gorges de deux éléments roulants (6) sont symétriques par rapport à un élément roulant (6) ayant un décalage V = 0, et deux éléments roulants (6) ayant les décalages $V = V_0$ et $V = -V_0$ présentent des formes de construction identiques et sont montés en directions inverses dans le dispositif (1), sachant qu'on peut réaliser différentes variantes de dispositif en utilisant des broches (2) de différents nombres de filets, et sachant qu'on peut utiliser pour toutes les variantes de dispositif les mêmes types d'éléments roulants (6).

2. Procédé selon la revendication 1, **caractérisé en ce que** le diamètre de cercle primitif des éléments roulants (6) est, par adaptation de la broche (2), de même grandeur pour toutes les variantes de dispositif.

3. Procédé selon la revendication 1 ou 2, **caractérisé en ce que** les éléments roulants (6) utilisés pour une broche (2) à filets multiples sont tirés du jeu d'éléments roulants pour une broche (2) à filet unique.

4. Procédé selon l'une des revendications 1 à 3, **caractérisé en ce qu'**un jeu d'éléments roulants pour une broche (2) à filet unique forme dans la direction circonférentielle de la broche (2) une rangée prédéfinie de N éléments roulants (6), et **en ce qu'**à partir de ce jeu d'éléments roulants, un jeu d'éléments roulants pour une broche (2) ayant un nombre G de filets (G > 1) peut être généré par le fait que, dans la rangée d'éléments roulants (6), en partant d'un élément roulant pouvant être librement choisi, on sélectionne N fois chaque G-ième élément roulant (6).

5. Procédé selon la revendication 4, **caractérisé en ce que** l'élément roulant (6) à partir duquel on démarre la sélection est choisi de telle sorte que le nombre de formes différentes de construction d'éléments roulants à l'intérieur d'un jeu d'éléments roulants est minimal.

## Fig. 1

EP 1 978 283 B1

## Fig. 2

a)  $\underline{6}$     6a   T    6b    S    6a

b)  $\underline{6}$    6b    $-V_0$

c)  $\underline{6}$    6a    $-V_0$    6b

## Fig. 3

$\underline{6}$    6a    6b    6a

Typ A    $5/12\ T = V_1$

Typ B    $3/12\ T = V_2$

Typ C    $1/12\ T = V_3$

Typ $\underline{C}$    $-1/12\ T = V_4$

Typ $\underline{B}$    $-3/12\ T = V_5$

Typ $\underline{A}$    $-5/12\ T = V_6$

EP 1 978 283 B1

# Fig. 5

# Fig. 4

Fig. 6a

Fig. 6b

Fig. 6c

Fig. 6d

Fig. 7

Fig. 8

Fig. 9

**Fig. 10a**

**Fig. 10b**

**Fig. 10c**

**IN DER BESCHREIBUNG AUFGEFÜHRTE DOKUMENTE**

**In der Beschreibung aufgeführte Patentdokumente**

- DE 3739059 A1
- DE 19516199 A1